(19) Europäisches Patentamt
European Patent Office
Office européen des brevets

(11) **EP 4 325 248 A1**

(12) **EUROPEAN PATENT APPLICATION**

(43) Date of publication:
**21.02.2024 Bulletin 2024/08**

(21) Application number: **23185263.3**

(22) Date of filing: **13.07.2023**

(51) International Patent Classification (IPC):
**G01S 13/88** (2006.01)   **G01S 7/40** (2006.01)
**B66B 1/34** (2006.01)   **B66B 3/02** (2006.01)
**G01S 13/06** (2006.01)   **B66B 5/00** (2006.01)

(52) Cooperative Patent Classification (CPC):
**G01S 13/88; B66B 1/3492; G01S 7/40;
G01S 7/4091; G01S 7/4095; G01S 13/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.08.2022 CN 202210991338**

(71) Applicant: **Honeywell International Inc.
Charlotte, NC 28202 (US)**

(72) Inventors:
• **LU, Yang
Charlotte, 28202 (US)**
• **YU, Jiankang
Charlotte, 28202 (US)**
• **YANG, Fan
Charlotte, 28202 (US)**
• **HU, Yu
Charlotte, 28202 (US)**

(74) Representative: **Haseltine Lake Kempner LLP
Cheapside House
138 Cheapside
London EC2V 6BJ (GB)**

(54) **METHOD AND APPARATUS OF PRECISELY RECOGNIZING TARGET REFLECTOR WHEN USING RADAR SENSOR IN ELEVATOR SHAFT**

(57)    Systems and methods for training a radar sensor to determine positioning of an elevator car within an elevator system are provided. The method comprises calibrating a target reflector signal, calibrating one or more reference reflector signals, comparing frequencies of the target reflector signal and the one or more reference reflector signals, determining for each of the one or more reference reflector signals, a frequency distance between the target reflector signal and the reference reflector signal, and generating a distance measuring signal pattern based on the frequency distance of each of the one or more reference reflector signals.

FIG. 7

## Description

## FIELD OF THE INVENTION

Example embodiments of the present disclosure relate generally to elevator systems, and in particular, improved elevator positioning systems with radio detection and ranging ("radar") sensors.

## BACKGROUND

In convention/pre-existing elevator positioning systems, obstructions may exist in elevator shafts which may prevent radar sensors from functioning properly. Specifically, obstructions may introduce signal noises in the elevator shafts, which could lead to errors when using a radar sensor in such an environment. There is thus a need to overcome such challenges and difficulties in elevator positioning systems.

## BRIEF SUMMARY

Various embodiments described herein relate to components, apparatuses, and systems for identifying signals from reflectors in radar-based elevator positioning systems.

In accordance with various embodiments of the present disclosure, a method for training a radar sensor to determine positioning of an elevator car within an elevator system is provided. In some embodiments, the method comprises calibrating, by the radar sensor, a target reflector signal, calibrating, by the radar sensor, one or more reference reflector signals, comparing, by the radar sensor, frequencies of the target reflector signal and the one or more reference reflector signals, determining, by the radar sensor, for each of the one or more reference reflector signals, a frequency distance between the target reflector signal and the reference reflector signal, and generating, by the radar sensor, a distance measuring signal pattern based on the frequency distance of each of the one or more reference reflector signals.

In some embodiments, the target reflector signal may comprise a signal from reflection of electromagnetic waves emitted by the radar sensor by a main reflector. In some embodiments, the target reflector signal may be associated with a static location corresponding to the main reflector. In some embodiments, calibrating the target reflector signal may comprise emitting, by the radar sensor, electromagnetic waves comprising a transmission signal, and monitoring, by the radar sensor, for the target reflector signal from a reflection of the electromagnetic waves by a main reflector. In some embodiments, the one or more reference reflector signals may comprise one or more signals from reflection of electromagnetic waves emitted by the radar sensor by one or more corresponding reference reflectors. In some embodiments, the one or more reference reflector signals may be associated with static locations corresponding to the one or more reference reflectors. In some embodiments, calibrating the one or more reference reflector signals may comprise emitting, by the radar sensor, electromagnetic waves comprising a transmission signal, and monitoring, by the radar sensor, for the one or more reference reflector signals from reflections of the electromagnetic waves by one or more corresponding reference reflectors. In some embodiments, the frequency distance may comprise a difference in signal frequencies between the target reflector signal and the reference reflector signal.

In some embodiments, the method may further comprise receiving a location determination request, emitting electromagnetic waves comprising a transmission signal in response to the location determination request, monitoring for signals from reflection of the electromagnetic waves by a main reflector and one or more reference reflectors, recording signals detectable by the radar sensor, calculating, iteratively for each recorded signal, frequency differences $F_{(n-1)n} = f_{n-1} - f_n$ over frequency domains $f_1, f_2, ... f_n$, searching for a match of the distance measuring signal pattern to the calculated frequency differences, determining a match to the distance measuring signal pattern, identifying the target reflector signal based on the match, and determining a distance based on the target reflector signal. In some embodiments, the location determination request may comprise a request for the radar sensor to determine a height of the elevator car. In some embodiments, the method may further comprise populating to a matrix row, for each frequency domain, the frequency differences for each recorded signal from a signal of a given frequency domain. In some embodiments, the method may further comprise matching frequency distances of the distance measuring signal pattern to the calculated frequency differences by frequency domain.

According to another embodiment, a system for training a radar sensor to determine positioning of an elevator car within an elevator system is provided. In some embodiments, the system comprises a memory device having executable instructions stored therein, and a processor, in response to the executable instructions, configured to calibrate a target reflector signal, calibrate one or more reference reflector signals, compare frequencies of the target reflector signal and the one or more reference reflector signals, determine, for each of the one or more reference reflector signals, a frequency distance between the target reflector signal and the reference reflector signal, and generate a distance measuring signal pattern based on the frequency distance of each of the one or more reference reflector signals.

In some embodiments, the frequency distance may comprise a difference in signal frequencies between the target reflector signal and the reference reflector signal. In some embodiments, the processor may be further configured to receive a location determination request, emit electromagnetic waves comprising a transmission signal in response to the location determination request, monitor for signals from reflection of the electromagnetic waves by a main reflector and one or more reference reflectors, record signals detectable by the radar sensor, calculate, iteratively for each recorded signal, frequency differences $F_{(n-1)n} = f_{n-1} - f_n$ over frequency domains $f_1$, $f_2$, ... $f_n$, search for a match of the distance measuring signal pattern to the calculated frequency differences, determine a match to the distance measuring signal pattern, identify the target reflector signal based on the match, and determine a distance based on the target reflector signal. In some embodiments, the processor may be further configured to populate to a matrix row, for each frequency domain, the frequency differences for each recorded signal from a signal of a given frequency domain.

According to yet another embodiment, a method for calibrating signal frequency signature by a radar sensor in an elevator system is provided. In some embodiments, the method comprises emitting, by the radar sensor, electromagnetic waves comprising a transmission signal to perform a calibration procedure with a reflector configured in a first position, receiving, by the radar sensor, a first signal comprising a reflection of the electromagnetic waves by the reflector, recording, by the radar sensor, the first signal corresponding to the first position of the reflector, actuating, by the radar sensor, an electromechanical device coupled to the reflector causing the reflector to move to a second position, receiving, by the radar sensor, a second signal comprising a reflection of the electromagnetic waves by the reflector configured in the second position, recording, by the radar sensor, the second signal corresponding to the second position of the reflector, comparing, by the radar sensor, the first signal with the second signal, and determining, by the radar sensor, a reference frequency difference usable by the radar sensor to identify signals corresponding to the reflector from amongst a plurality of signals.

In some embodiments, comparing the first signal with the second signal may further comprise comparing an initial frequency associated with the first signal to a second frequency associated with the second signal. In some embodiments, actuating the electromechanical device may cause an adjustment of a height of the reflector.

In some embodiments, the method may further comprise actuating the electromechanical device causing the reflector to move to the first position, receiving a third signal comprising a reflection of the electromagnetic waves by the reflector configured in the first position, recording the third signal corresponding to the first position of the reflector, comparing the second signal with the third signal, and confirming the reference frequency difference based on the comparison of the second signal with the third signal.

The foregoing illustrative summary, as well as other exemplary objectives and/or advantages of the disclosure, and the manner in which the same are accomplished, are further explained in the following detailed description and its accompanying drawings.

## BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 illustrates an exemplary elevator system.
FIG. 2 illustrates an exemplary comparison of a signal transmitted from a radar sensor and a signal received from a reflector.
FIG. 3 illustrates an exemplary illustration of a relationship between frequency and distance.
FIG. 4 illustrates an exemplary series of signal frequency measurements.
FIG. 5 illustrates an exemplary depiction of an elevator system.
FIG. 6 illustrates exemplary signals received from reflection of electromagnetic waves within an elevator system.
FIG. 7 presents an exemplary depiction of an elevator system in accordance with some example embodiments described herein.
FIG. 8 illustrates an exemplary method for training a radar sensor in accordance with some example embodiments described herein.
FIG. 9 illustrates an exemplary frequency of a target reflector signal in accordance with some example embodiments described herein.
FIG. 10 illustrates exemplary frequency differences in accordance with some example embodiments described herein.
FIG. 11 illustrates an exemplary method for identifying distance measuring signals in accordance with some example embodiments described herein.
FIG. 12 illustrates exemplary frequency difference calculations in accordance with some example embodiments described herein
FIG. 13 illustrates an exemplary frequency difference matrix data object in accordance with some example embodiments described herein.
FIG. 14 illustrates exemplary searching of frequency differences in accordance with some example embodiments described herein.
FIG. 15 illustrates an exemplary distance measuring signal pattern in accordance with some example embodiments described herein.
FIG. 16 illustrates an exemplary elevator system in accordance with some example embodiments described herein.

FIG. 17 illustrated an exemplary method for calibrating a signal frequency signature by a radar sensor in an elevator system in accordance with some example embodiments described herein.

FIG. 18 illustrates exemplary signals during calibration in accordance with some example embodiments described herein.

FIG. 19 illustrates an exemplary signal frequency signature in accordance with some example embodiments described herein.

FIG. 20 illustrates a schematic diagram depicting an example radar sensor in accordance with some example embodiments described herein.

## DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

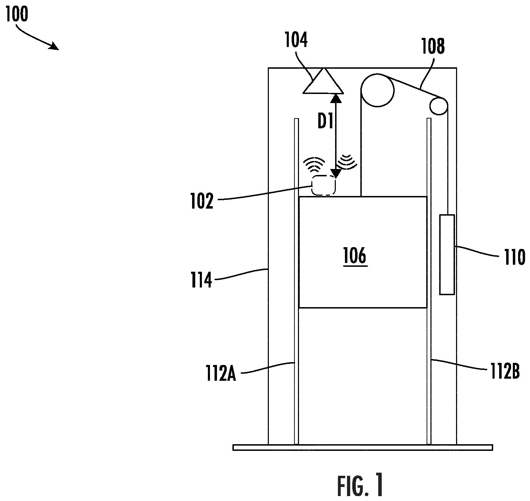

Referring now to Fig. 1, an elevator system 100 comprises an elevator car 106, a pulley system 108, a counterweight 110, elevator supports 112A and 112B, and an elevator shaft 114. The elevator system 110 further comprises a radar sensor 102 that may be configured to determine its distance from a top of elevator shaft 114. According to the illustrated embodiment, the radar sensor 102 is configured at the top of the elevator car 106 and a reflector 104 is configured at the top of the elevator shaft 114. The reflector 104 may comprise a metallic object capable of reflecting electromagnetic waves, such as radio waves that may be emitted from radar sensor 102. Radio waves may be distorted when reflected by reflector 104. For example, certain attributes such as amplitude and frequency of a radio wave may be altered upon reflection from reflector 104.

Radar sensor 102 may emit electromagnetic waves comprising a transmission signal to perform a distance measurement with reflector 104. The radar sensor 102 may be configured to determine a height D1 between the radar sensor 102 and the reflector 104, wherein height D1 is representative of the distance between radar sensor 102 and the top of elevator shaft 114. For example, the electromagnetic waves may be reflected from the reflector 104 and received as a signal by the radar sensor 102. The radar sensor 102 may then compare the received signal with the transmission signal. The received signal may comprise a signal similar to the transmission signal but may be frequency shifted.

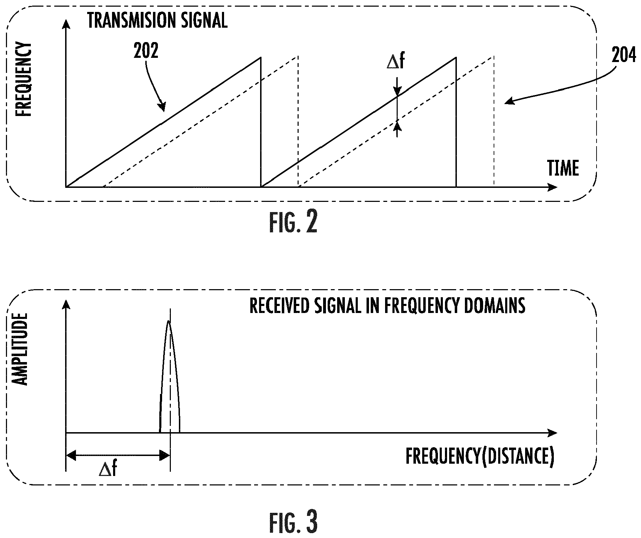

FIG. 2 presents an exemplary comparison between a signal transmitted from a radar sensor and a signal received from a reflector. Transmission signal 202 may be representative of a signal transmitted from radar sensor 102. Received signal 204 may be representative of the transmission signal 202 reflected by reflector 104 and subsequently received by radar sensor 102. The received signal 204 may be representative of a signal resulting from reflection of transmission signal 202 from reflector 104. As illustrated, received signal 204 includes a pattern that is similar to transmission signal 202 with the exception of a difference in frequency. The difference in frequency, $\Delta f$, may correspond to a distance between radar sensor 102 and reflector 104.

Accordingly, distance D1 may be calculated according to the following:

$$D_1 = \frac{C_0}{2}\left(\frac{1}{\frac{df}{dt}}\right) \cdot \Delta f = k \cdot \Delta f$$

Equation 1

According to the above equation, $C_0$ represents the speed of light, $df/dt$ represents frequency shift per unit of time, and $k$ represents an equivalent coefficient.

FIG. 3 presents an exemplary illustration of a relationship between frequency and distance. A distance of a reflective source (e.g., reflector 104) relative to radar sensor 102 may be determined by analyzing a received signal with reference to a transmission signal according to a frequency domain. In particular, a value of $\Delta f$ may be used to estimate an approximate distance between a reflective source of a received signal and the radar sensor 102.

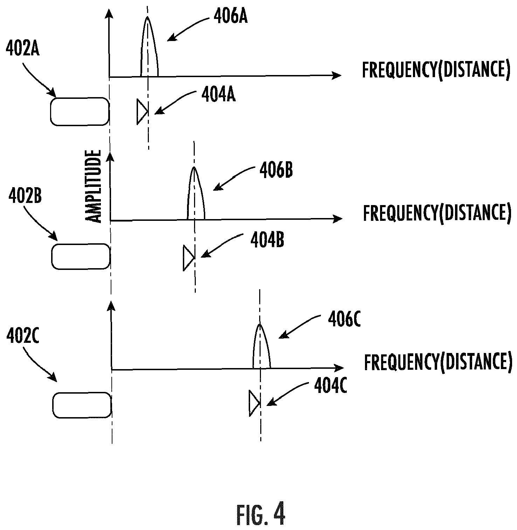

FIG. 4 presents an exemplary series of signal frequency measurements. Distance from radar sensor 102 and reflector 104 may be in direct proportion to $\Delta f$. As an example, as an elevator car moves during operation, a distance between a radar sensor 102 and reflector 104 changes. As such, $\Delta f$ of signals received by the radar sensor 102 changes with respect to the distance between radar sensor 102 and reflector 104.

According to FIG. 4, frequency shift in relationship to distance is depicted. In particular, distances between radar sensors 402A, 402B, 402C and reflectors 404A, 404B, 404C are illustrated with respect to frequency difference (e.g., $\Delta f$). Generally, the distance between the radar sensor and the reflector is in direction relationship to $\Delta f$. It is noted that the amplitude of received signals may be inversely proportional to distance (e.g., signal amplitude decreases with increased distance between radar sensor and reflector).

As described above, electromagnetic waves reflected by a reflector can be used by a radar sensor to determine an approximate distance between the reflector and radar sensor. However, an elevator shaft may present challenges for such a radar sensor. In particular, obstructions within a transmission path between a radar sensor and a reflector may interfere with the radar's sensor's ability to receive signals from electromagnetic waves reflected by the reflector. For example, obstructions, such as electrical boxes and support structures, are common within an elevator shaft and may interfere with reflection of radio waves from a radar sensor.

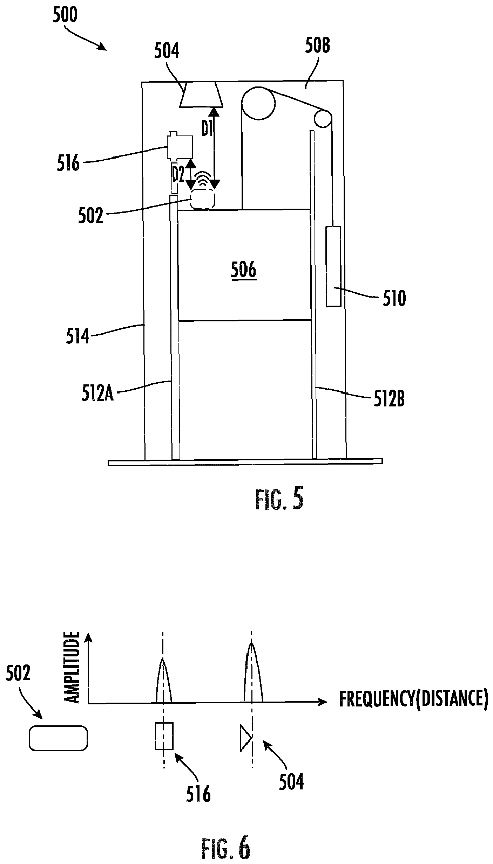

FIG. 5 presents an exemplary depiction of an elevator system. The elevator system 500 comprises an elevator car 506, a pulley system 508, a counterweight 510, elevator supports 512A and 512B, and an elevator shaft 514. The elevator system 500 further comprises radar sensor 502 configured at the top of the elevator car 506 and a reflector 504 is configured at the top of the elevator shaft 514. According to the illustrated embodiment, an obstruction 516 is between radar sensor 502 and reflector 504, and causes at least one of interfering (e.g., but not obscuring), partially obscuring, or completely obscuring radio wave transmission and/or reflection between radar sensor 502 and reflector 504. Examples of obstruction 516 may comprise an electrical box or elevator support structure capable of reflecting electromagnetic waves from radar sensor 502.

As illustrated in FIG. 6, signals received from reflection of electromagnetic waves from reflector 504 and obstruction 516 may appear similar. As such, radar sensor 502 may not be able to distinguish between signals from reflector 504 and obstruction 516. The radar sensor 502 may fail to measure the height of elevator car 506 as signals representative of distances $D_1$ (reflector 504) and $D_2$ (obstruction 516) from radar sensor 503 may be muddled.

Various example embodiments of the present disclosure overcome such technical challenges and difficulties in current elevator positioning systems, and provide various technical advancements and improvements. In accordance with various examples of the present disclosure, systems, apparatus, and methods for mitigating/reducing interferences in the elevator shaft of elevator systems are disclosed. In at least one embodiment, one or more reference reflectors may be used to create unique signal patterns in frequency domains to distinguish target signals from noise signals. The one or more reference reflectors may be aligned with a radar sensor and configured in-between a main reflector and the radar sensor without blocking (the line-of-sight) of the main reflector.

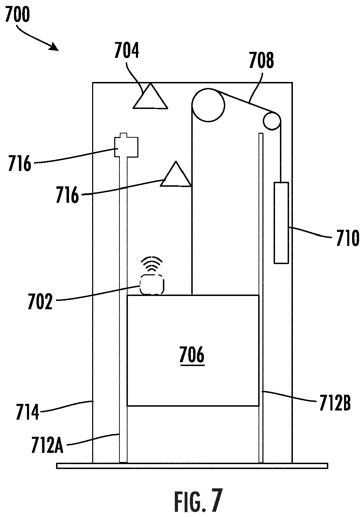

FIG. 7 presents an elevator system according to various embodiments of the present disclosure. The elevator system 700 comprises a radar sensor 702, a main reflector 704, an elevator car 706, a pulley system 708, a counterweight 710, elevator supports 712A and 712B, an elevator shaft 714, and obstruction 716. Radar sensor 702 is configured at the top of the elevator car 706 and the main reflector 704 is configured at the top of the elevator shaft 714. The elevator system 700 further comprises one or more reference reflector(s) 718. The one or more reference reflector(s) 718 may be used in generating unique signal patterns in frequency domains for radar sensor 702. As an example, unique signal patterns may be used to identify signals associated with the one or more reference reflector(s) 718.

The radar sensor 702 may include a signal transmitter, a signal receiver, signal processing components, network communication components, and/or a computing device including one or more processors and memory devices. The radar sensor 702 may be configured to emit electromagnetic waves comprising a transmission signal, monitor for reflection of the electromagnetic waves as reflection signals, analyze the reflection signals, and identify whether the reflection signals correspond to specific signal frequency signatures. The specific signal frequency signatures may include frequency characteristics associated with the main reflector 704 and the one or more reference reflector(s) 718. Based on the specific signal frequency signatures, the radar sensor 702 may be further configured determine a distance from radar sensor 702 and main reflector 704 (e.g., representative of distance from top of elevator car 706 to top of elevator shaft 714).

As illustrated, the main reflector 704 is vertically aligned with the radar sensor 702. The one or more reference reflector(s) 718 are positioned in between the horizontal planes of radar sensor 702 and main reflector 704 but not within a vertical plane path between radar sensor 702 and main reflector 704. Additionally, obstruction 716 is configured such that it is not within the vertical plane path between radar sensor 702 and main reflector 704 and a vertical plane path between radar sensor 702 and reference reflector(s) 718.

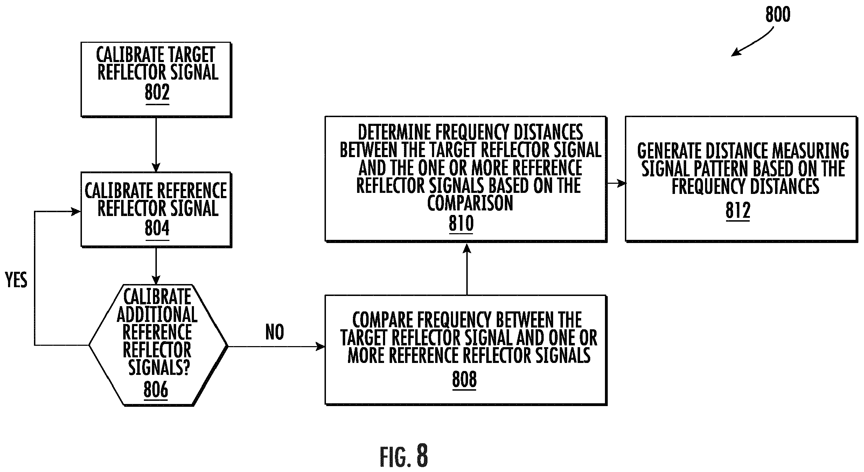

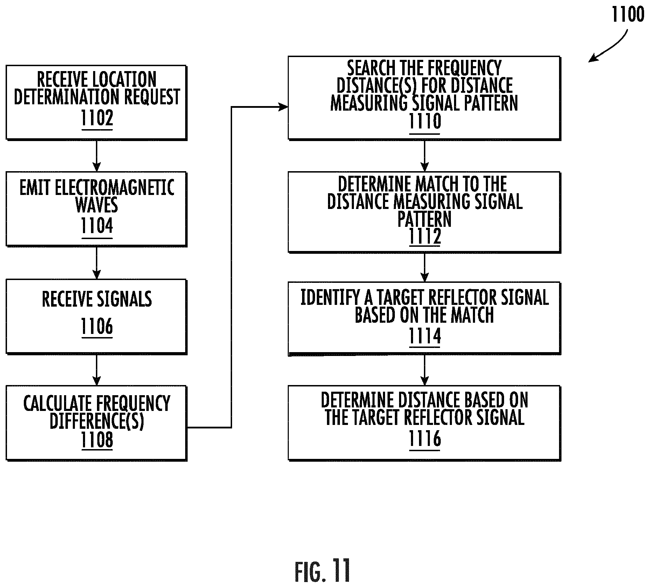

Referring now to FIG. 8 and FIG. 11, example flow diagrams illustrating example methods of determining positions of radar reflectors in elevator system 700 in accordance with some example embodiments of the present disclosure are provided. It is noted that each block of the flowchart, and combinations of blocks in the flowchart, may be implemented by various means such as hardware, firmware, circuitry and/or other devices associated with execution of software including one or more computer program instructions. For example, one or more of the steps/operations described in FIG. 8 and FIG. 11 may be embodied by computer program instructions, which may be stored by a non-transitory memory of an apparatus employing an embodiment of the present disclosure and executed by a processor component in an apparatus (such as, but not limited to, a radar sensor, a monitoring system, a client computing device, a remote computing server, and/or the like). For example, these computer program instructions may direct the processor component to function in a particular manner, such that the instructions stored in the computer-readable storage memory cause the execution of activities which implement the function specified in the flowchart block(s).

As described above and as will be appreciated based on this disclosure, embodiments of the present disclosure may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 8, an example method 800 for training a radar sensor in accordance with some example embodiments described herein is illustrated. Training the radar sensor may comprise an initialization procedure during which the radar sensor "learns" to recognize signals corresponding to a main reflector and one or more reference reflectors. Obstructions or barriers may be removed during the training process such that signals from reflection of electromagnetic waves by the main reflector and the one or more reference reflectors can be properly recognized.

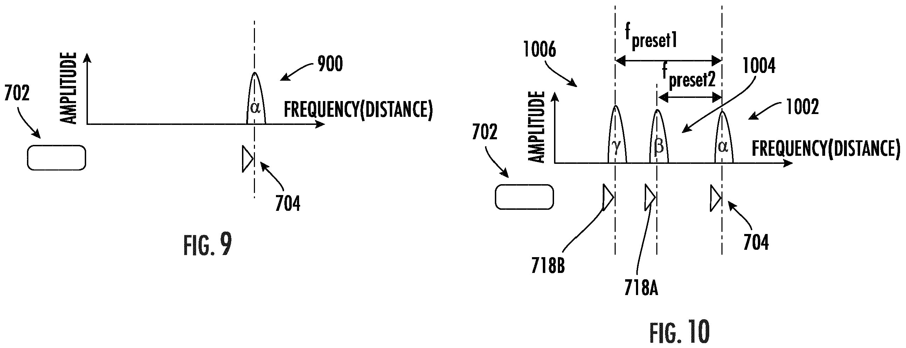

At step 802, the radar sensor calibrates a target reflector signal. The target reflector signal may comprise a signal from reflection of electromagnetic waves emitted by the radar sensor by a main reflector. The target reflector signal may be used to establish a static location corresponding to the main reflector. For the calibration of the target reflector signal, the main reflector may be positioned at a given calibration distance (e.g., two meters) from the radar sensor by, for example, moving the radar sensor and/or the main reflector. Upon positioning of the main reflector at the given calibration distance from the radar sensor, the calibration may include the radar sensor emitting electromagnetic waves comprising a transmission signal and monitoring for a corresponding signal (i.e., the target reflector signal) from a reflection of the electromagnetic waves by a main reflector. The location of the main reflector may remain in a fixed location after calibration to establish a basis for identification by the radar sensor. Referring to FIG. 9, a frequency of the target reflector signal 900 may be recorded by the radar sensor, denoted by $\alpha$.

In some embodiments, monitoring for the target reflector signal may comprise the radar sensing receiving a signal and comparing a frequency of the received signal with an expected target reflector signal frequency. For example, an expected target reflector signal may include a frequency corresponding to the given calibration distance. If the frequency of the received signal is not within a given threshold of the expected target reflector signal frequency, the received signal may be determined as a false signal and the radar sensor may restart the calibration.

Referring back to FIG. 8, in some embodiments, subsequent to step 802, the example method proceeds to step 804, where the radar sensor calibrates a reference reflector signal. A reference reflector signal may comprise a signal from reflection of electromagnetic waves emitted by the radar sensor by a reference reflector. A reference reflector signal may also be used to establish a static location corresponding to a reference reflector. The reference reflector may be configured at a given distance between the radar sensor and the main reflector while maintaining the given calibration distance from step 802. Upon configuring the reference reflector, the calibration of the reference reflector signal may include the radar sensor emitting electromagnetic waves comprising a transmission signal and monitoring for a corresponding signal (i.e., a reference reflector signal) from reflection of the electromagnetic waves by the main reflector and a reference reflector. The location of the reference reflector may remain in a fixed location after calibration to establish a basis for identification by the radar sensor. As such, frequency of the reference reflector signal may be recorded in relationship to the target reflector signal by the radar sensor.

In some embodiments, subsequent to step 804, the example method proceeds to step 806, where the radar sensor determines whether calibration for additional reference reflector signals is required. If yes, the example method returns to step 804. Otherwise, subsequent to step 806, the example method proceeds to step 808, where the radar sensor compares the frequencies of the target reflector signal and the one or more reference reflector signals.

In some embodiments, subsequent to step 808, the example method proceeds to step 810, where the radar sensor determines, for each of the calibrated reference reflector signals, a frequency distance between the target reflector signal and the reference reflector signal. A frequency distance may comprise a difference in signal frequencies between the target reflector signal and the reference reflector signal.

FIG. 10 presents exemplary frequency distances where the target reflector signal 1002 (from main reflector 704) is denoted by $\alpha$, a first reference reflector signal 1004 (from reference reflector 718A) is denoted by $\beta$, and a second reference reflector signal 1006 (from reference reflector 718B) is denoted by $\gamma$. According to the illustrated example, frequency distance $f_{preset1}$ is representative of a frequency difference between target reflector signal 1002 and the first reference reflector signal 1004. Frequency distance $f_{preset1}$ may be calculated by subtracting frequency $f_{\alpha}$ of the target reflector signal 1002 by frequency $f_{\beta}$ of the first reference reflector signal 1004. Similarly, frequency distance $f_{preset2}$ may be calculated by subtracting frequency $f_{\alpha}$ of the target reflector signal 1002 by frequency $f_{\gamma}$ of the second reference reflector signal 1006.

In some embodiments, subsequent to step 810, the example method proceeds to step 812, where the radar sensor generates a distance measuring signal pattern based on the frequency distances. The frequency distances may comprise unique signal patterns for identifying signals corresponding to the main and reference reflectors. That is, given that the positions of the main reflector and the reference reflectors are fixed, the frequency distances between the target reflector signal and the reference reflector signals may be used as identifiable signal constants for measuring distance. According to the previous example, frequency distance $f_{preset1}$ and frequency distance $f_{preset2}$ may be used to create a distance measuring signal pattern.

Referring now to FIG. 11, an example method 1100 of identifying distance measuring signals by a radar sensor in accordance with some example embodiments described herein is illustrated. At step 1102, a radar sensor receives a location determination request. The location determination request may comprise a request for the radar sensor to determine a height of an elevator. For example, the height of the elevator may be used to control operation of the elevator, such as determining when to start or stop movement of the elevator car.

In some embodiments, subsequent to step 1102, the example method proceeds to step 1104, where the radar sensor emits electromagnetic waves comprising a transmission signal in response to the location determination request.

In some embodiments, subsequent to step 1104, the example method proceeds to step 1106, where the radar sensor receives signals from reflection of the electromagnetic waves including from those from a main reflector and one or more reference reflectors.

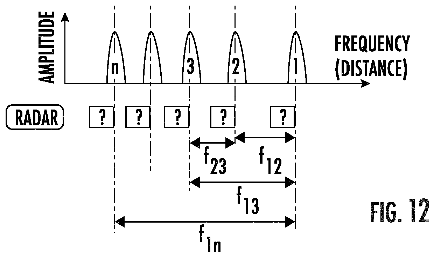

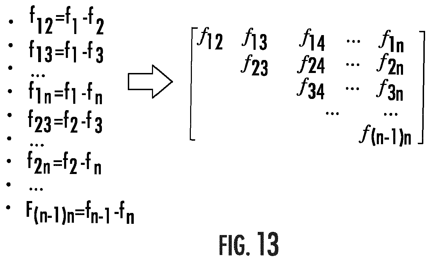

In some embodiments, subsequent to step 1106, the example method proceeds to step 1108, where the radar sensor calculates iteratively for each received signal, frequency difference(s) $F_{(n-1)n} = f_{n-1} - f_n$ over frequency domains $f_1, f_2, \ldots f_n$. FIG. 12 presents exemplary frequency difference calculations for a frequency domain $f_1$. Frequency difference for each signal from a signal of a given frequency domain may be calculated and populated to rows of a matrix data object. Frequency differences may be generated to rows in the matrix data object for each frequency domain as illustrated in FIG. 13. As such, the frequency differences may be recorded (e.g., in a memory storage device) in ordered fashion according to consecutive signal distances for each signal.

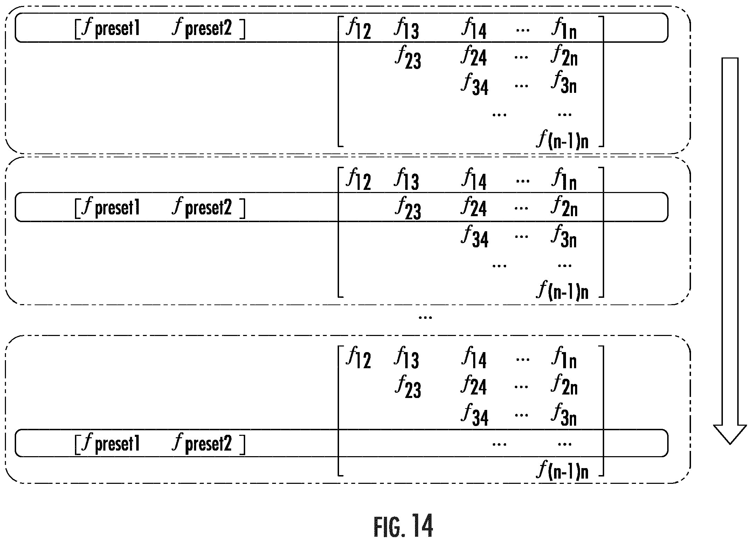

Referring back to FIG. 11, in some embodiments, subsequent to step 1108, the example method proceeds to step 1110, where the radar sensor searches for a match of a distance measuring signal pattern to the frequency differences. The distance measuring signal pattern may comprise one or more frequency distances determined from calibration of a target reflected signal and one or more reference reflected signals, as described above. Matching the distance measuring signal pattern to the frequency differences may comprise matching the frequency distances of the distance measuring signal pattern to the calculated frequency differences by frequency domain. The radar sensor may search consecutive signal distances for each signal that match the distance measuring signal pattern. As shown by FIG. 14, a search of two elements matching to $[f_{preset1}, f_{preset2}]$ may be performed on a matrix data object including frequency differences, as described above, from a first frequency domain to frequency domain $n$ for $n$ number of frequency domains.

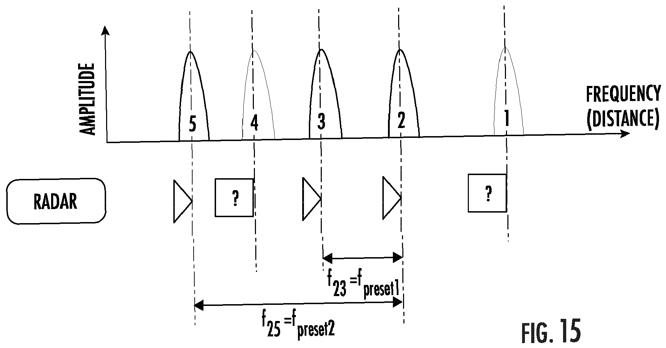

Referring back to FIG. 11, in some embodiments, subsequent to step 1110, the example method proceeds to step 1112, where the radar sensor determines a match to the distance measuring signal pattern. Matching the calculated frequency distances to the distance measuring signal pattern may indicate the presence of a main reflector and the one or more reference reflectors. Particular, the matching may be used to identify which of the recorded signals correspond to the main reflector and the one or more reference reflectors. Referring to FIG. 15, for example, if $f_{23}=f_{preset1}$ and $f_{25} = f_{preset2}$, then signal '2' may be identified as a signal from the main reflector and signals '3' and '5' may be identified as signals from two reference reflectors.

Referring back to FIG. 11, in some embodiments, subsequent to step 1112, the example method proceeds to step 1114, where the radar sensor identifies the target reflector signal based on the match. That is, the target reflector signal may be identified from a plurality of signals detected by the radar sensor.

In some embodiments, subsequent to step 1114, the example method proceeds to step 1116, where the radar sensor determines a distance using the matched frequency differences. In particular, the radar sensor may identify the main reflector from the matched frequency differences and determine a frequency difference between the transmitted signal and the target reflector signal. The frequency difference between the transmitted signal and the target reflector signal may be used to determine a distance between the radar sensor and the main reflector according to the techniques described above.

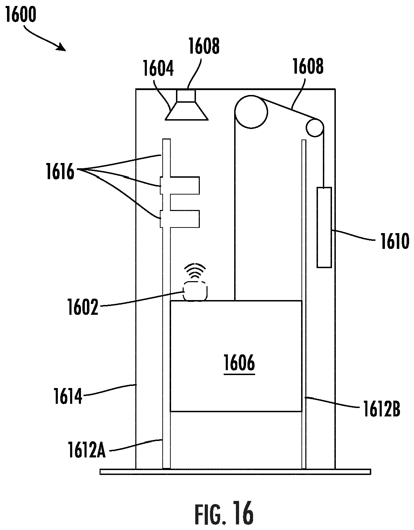

FIG. 16 presents an exemplary depiction of an elevator system according to various embodiments of the present disclosure. The elevator system 1600 comprises a radar sensor 1602, a reflector 1604, an elevator car 1606, a pulley system 1608, a counterweight 1610, elevator supports 1612A and 1612B, an elevator shaft 1614, and obstructions 1616. Radar sensor 1602 is configured at the top of the elevator car 1606 and the reflector 1604 is configured at the top of the elevator shaft 1614. The reflector 1604 includes an electromechanical device 1618. The electromechanical device 1618 may comprise an oscillator or vibration motor that may be configured to reposition the height of reflector 1604 (e.g., in a small range very quickly). As such, in some embodiments of the present disclosure, the electromechanical device 1618 may cause the reflector 1604 to move between alternative positions such that a unique signal frequency signature may be created.

The radar sensor 1602 may include a signal transmitter, a signal receiver, signal processing components, network communication components, and/or a computing device including one or more processors and memory devices. The radar sensor 1602 may be configured to emit electromagnetic waves comprising a transmission signal, monitor for reflection of the electromagnetic waves as reflection signals, analyze the reflection signals, and identify whether the reflection signals correspond to a specific signal frequency signature. The specific signal frequency signature may include frequency characteristics associated with movement of the reflector 1604 between alternate positions over a given time frame. Accordingly, the specific signal frequency signature of the reflector 1604 may be used to distinguish noise from signals corresponding to the reflector 1604. Based on the specific signal frequency signature, the radar sensor 1602 may be further configured determine a distance from radar sensor 1602 and reflector 1604 (e.g., representative of distance from top of elevator car 1606 to top of elevator shaft 1614).

According to some embodiments of the present disclosure, a specific signal frequency signature may be generated for reflector 1604. In particular, the height of reflector 1604 from the top of the elevator shaft 1614 may be manipulated via the electromechanical device 1618 to create a specific signal frequency signature that may be recorded during a calibration procedure and identified by radar sensor 1602 to distinguish noise signals from reflection signals of reflector 1604.

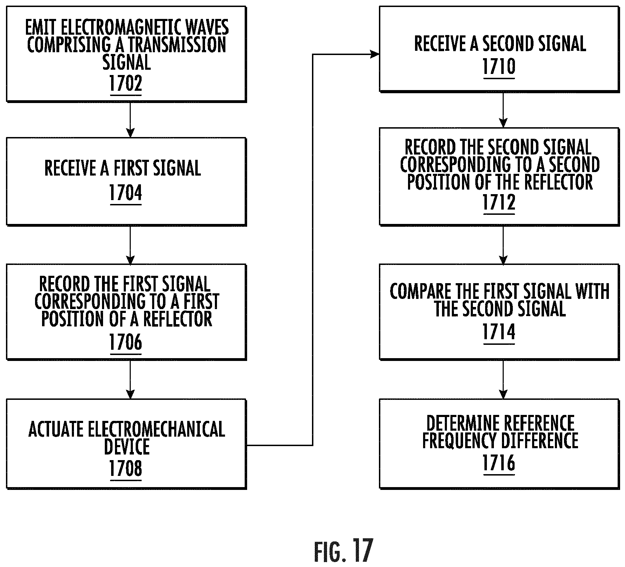

Referring now to FIG. 17, an example method 1700 for calibrating a signal frequency signature by a radar sensor in an elevator system in accordance with some example embodiments described herein is illustrated. At step 1702, the radar sensor 1602 emits electromagnetic waves comprising a transmission signal to perform a calibration procedure with reflector 1604 in a first position.

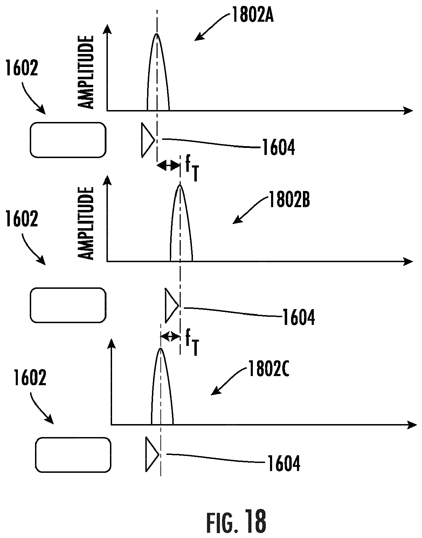

In some embodiments, subsequent to step 1702, the example method proceeds to step 1704, where the radar sensor receives a first signal. The first signal may comprise a reflection of the electromagnetic waves by the reflector. Referring to FIG. 18, electromagnetic waves from radar sensor 1602 may be reflected from the reflector 1604 and received as a first signal 1802A by the radar sensor 1602.

Referring back to FIG. 17, in some embodiments, subsequent to step 1704, the example method proceeds to step 1706, where the radar sensor records the first signal corresponding to a first position of the reflector. An initial frequency may be recorded for the reflector 1604 in the first position.

In some embodiments, subsequent to step 1706, the example method proceeds to step 1708, where the radar sensor actuates an electromechanical device coupled to the reflector. Actuating the electromechanical device may cause the reflector to move from the first position to a second position. For example, the height of the reflector 1604 may be adjusted by radar sensor 1602 actuating electromechanical device 1618, such that the reflector 1604 is moved into the second position. The radar sensor 1602 may again emit electromagnetic waves comprising a transmission signal.

In some embodiments, subsequent to step 1708, the example method proceeds to step 1710, where the radar sensor receives a second signal. The second signal may comprise a reflection of the electromagnetic waves by the reflector configured in the second position. Referring to FIG. 18, the electromagnetic waves may be reflected from the reflector 1604 and received as a second signal 1802B by the radar sensor 1602 for recording the reflector 1604 in a second position.

Referring back to FIG. 17, in some embodiments, subsequent to step 1710, the example method proceeds to step 1712, the second signal is recorded corresponding to a second position of the reflector. A second frequency may be recorded for the reflector 1604 in the second position.

In some embodiments, subsequent to step 1712, the example method proceeds to step 1714, where the radar sensor compares the first signal with the second signal. Referring to FIG. 18, the radar sensor 1602 may compare the received second signal 1802B with the first signal 1802A. In particular, the radar sensor 1602 may compare the initial frequency with the second frequency.

Referring back to FIG. 17, in some embodiments, subsequent to step 1714, the example method proceeds to step 1716, where the radar sensor determines a reference frequency difference $f_T$ between the first signal 1802A and the second signal 1802B based on the comparison.

According to some embodiments, the height of the reflector 1604 may then be adjusted by electromechanical device 1618 back to the first position. The radar sensor 1602 may again emit electromagnetic waves comprising a transmission signal. Referring to FIG. 18, the electromagnetic waves may be reflected from the reflector 1604 and received as a third signal 1802C by the radar sensor 1602 for recording the reflector 1604 back in the first position. A third frequency may be recorded for the reflector 1604 back in the first position. The radar sensor 1602 may compare the third frequency with the second frequency and confirm that the frequency difference between the third signal 1802C and the second signal 1802B matches the reference frequency difference $f_T$. The reference frequency difference $f_T$ may be used by the radar sensor 1602 as a specific signal frequency signature for identifying signals corresponding to the reflector 1604 from amongst a plurality of signals.

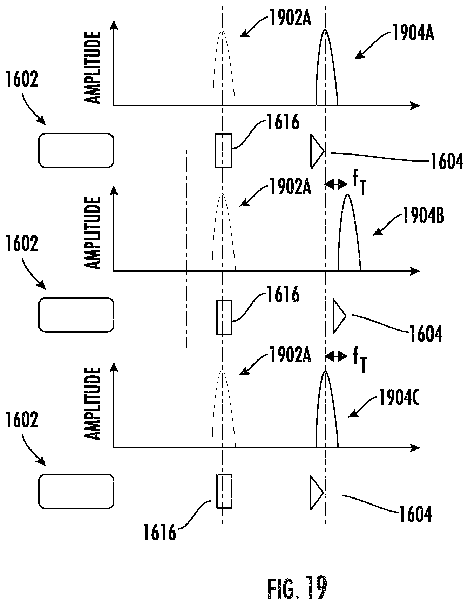

FIG. 19 presents an exemplary depiction of detecting a signal frequency signature according to various embodiments of the present disclosure. Noise and other interferences (e.g., caused by obstructions 1616) may be detected during location determination by a radar sensor while an elevator is in operation. However, signals from noise or obstructions 1616 are unlikely to move or change frequencies in a manner as disclosed with reference to FIG. 16 and FIG. 17. For example, signals 1902A, 1902B, and 1902C corresponding to obstructions 1616 comprise signals with a constant frequency, whereas signals 1904A, 1904B, and 1904C corresponding to reflector 1604 comprise signals that oscillate between two frequencies by a reference frequency difference $f_T$.

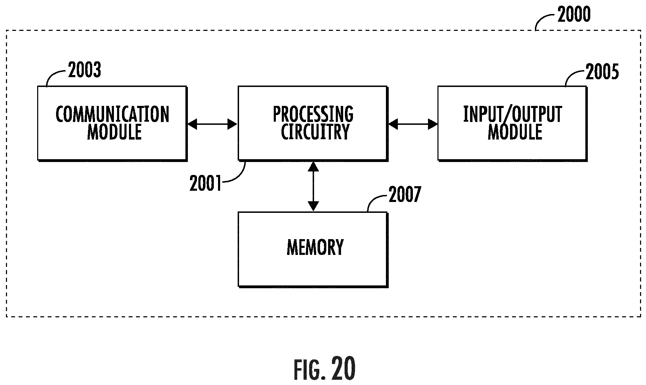

Referring now to FIG. 20, a schematic diagram depicting an example radar sensor 2000 in accordance with various embodiments of the present disclosure. As shown, the radar sensor 2000 comprises processing circuitry 2001, a communication module 2003, input/output module 2005, a memory 2007 and/or other components configured to perform various operations, procedures, functions or the like described herein.

The processing circuitry 2001 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 2001 may comprise one or more processors. In one exemplary embodiment, the processing circuitry 2001 is configured to execute instructions stored in the memory 2007 or otherwise accessible by the processing circuitry 2001. When executed by the processing circuitry 2001, these instructions may enable the radar sensor 2000 to execute one or a plurality of the functions as described herein. No matter whether it is configured by hardware, firmware/software methods, or a combination thereof, the processing circuitry 2001 may comprise entities capable of executing operations according to the embodiments of the present invention when correspondingly configured. Therefore, for example, when the processing circuitry 2001 is implemented as an ASIC, an FPGA, or the like, the processing circuitry 2001 may comprise specially configured hardware for implementing one or a plurality of operations described herein. Alternatively, as another example, when the processing circuitry 2001 is implemented as an actuator of instructions (such as those that may be stored in the memory 2007), the instructions may specifically configure the processing circuitry 2001 to execute one or a plurality of algorithms and operations described herein.

The memory 2007 may comprise, for example, a volatile memory, a non-volatile memory, or a certain combination thereof. Although illustrated as a single memory in FIG. 20, the memory 2007 may comprise a plurality of memory components. In various embodiments, the memory 2007 may comprise, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 2007 may be configured to store information, data, application programs, instructions, and etc., so that the radar sensor 2000 can execute various functions according to the embodiments of the present disclosure. For example, in at least some embodiments, the memory 2007 is configured to cache input data for processing by the processing circuitry 2001. Additionally, or alternatively, in at least some embodiments, the memory 2007 is configured to store program instructions for execution by the processing circuitry 2001. The memory 2007 may store information in the form of static and/or dynamic information. When the functions are executed, the stored information may be stored and/or used by the radar sensor 2000.

The communication module 2003 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory 2007) and executed by a radar sensor 2000 (for example, the processing circuitry 2001). In some embodiments, the communication module 2003 (as with other components discussed herein) may be at least partially implemented as the processing circuitry 2001 or otherwise controlled by the processing circuitry 2001. In this regard, the communication module 2003 may communicate with the processing circuitry 2001, for example, through a bus. The communication module 2003 may comprise, for example, antennas, transmitters, receivers, transceivers, network interface cards and/or supporting hardware and/or firmware/software, and is used for establishing communication with another apparatus. The communication module 2003 may be configured to receive and/or transmit any data that may be stored by the memory 2007 by using any protocol that can be used for communication between apparatuses. The communication module 2003 may also transmit and receive electromagnetic waves comprising signals and transmit the signals to the processing circuitry 2001. The communication module 2003 may additionally or alternatively communicate with the memory 2007, the input/output module 2005 and/or any other component of the radar sensor 2000, for example, through a bus.

In some embodiments, the radar sensor 2000 may comprise an input/output module 2005. The input/output module 2005 may communicate with the processing circuitry 2001 to receive instructions input by the user and/or to provide audible, visual, mechanical or other outputs to the user. Therefore, the input/output module 2005 may comprise supporting devices, such as a keyboard, a mouse, a display, a touch screen display, and/or other input/output mechanisms. Alternatively, at least some aspects of the input/output module 2005 may be implemented on a device used by the user to communicate with the radar sensor 2000. The input/output module 2005 may communicate with the memory 2007, the communication module 2003 and/or any other component, for example, through a bus. One or a plurality of input/output modules and/or other components may be included in the radar sensor 2000.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

**Claims**

1. A method for training a radar sensor to determine positioning of an elevator car within an elevator system, the method comprising:

   calibrating, by the radar sensor, a target reflector signal;
   calibrating, by the radar sensor, one or more reference reflector signals;
   comparing, by the radar sensor, frequencies of the target reflector signal and the one or more reference reflector signals;
   determining, by the radar sensor, for each of the one or more reference reflector signals, a frequency distance between the target reflector signal and the reference reflector signal; and
   generating, by the radar sensor, a distance measuring signal pattern based on the frequency distance of each of the one or more reference reflector signals.

2. The method of claim 1 wherein the target reflector signal comprises a signal from reflection of electromagnetic waves emitted by the radar sensor by a main reflector.

3. The method of claim 2 wherein the target reflector signal is associated with a static location corresponding to the main reflector.

4. The method of claim 1 wherein calibrating the target reflector signal comprises:

   emitting, by the radar sensor, electromagnetic waves comprising a transmission signal; and
   monitoring, by the radar sensor, for the target reflector signal from a reflection of the electromagnetic waves by a main reflector.

5. The method of claim 1 wherein the one or more reference reflector signals comprise one or more signals from reflection of electromagnetic waves emitted by the radar sensor by one or more corresponding reference reflectors.

6. The method of claim 5 wherein the one or more reference reflector signals are associated with static locations corresponding to the one or more reference reflectors.

7. The method of claim 1 wherein calibrating the one or more reference reflector signals comprises:

   emitting, by the radar sensor, electromagnetic waves comprising a transmission signal; and
   monitoring, by the radar sensor, for the one or more reference reflector signals from reflections of the electromagnetic waves by one or more corresponding reference reflectors.

8. The method of claim 1 wherein the frequency distance comprises a difference in signal frequencies between the target reflector signal and the reference reflector signal.

9. The method of claim 1 further comprising:

receiving a location determination request;
emitting electromagnetic waves comprising a transmission signal in response to the location determination request;
monitoring for signals from reflection of the electromagnetic waves by a main reflector and one or more reference reflectors;
recording signals detectable by the radar sensor;
calculating, iteratively for each recorded signal, frequency differences $F_{(n-1)n} = f_{n-1} - f_n$ over frequency domains $f_1, f_2, ... f_n$;
searching for a match of the distance measuring signal pattern to the calculated frequency differences;
determining a match to the distance measuring signal pattern;
identifying the target reflector signal based on the match; and
determining a distance based on the target reflector signal.

10. The method of claim 9 wherein the location determination request comprises a request for the radar sensor to determine a height of the elevator car.

11. The method of claim 9 further comprising: populating to a matrix row, for each frequency domain, the frequency differences for each recorded signal from a signal of a given frequency domain.

12. The method of claim 9 further comprising matching frequency distances of the distance measuring signal pattern to the calculated frequency differences by frequency domain.

13. A system for training a radar sensor to determine positioning of an elevator car within an elevator system, the system comprising:

a memory device having executable instructions stored therein; and
a processor, in response to the executable instructions, configured to:

calibrate a target reflector signal;
calibrate one or more reference reflector signals;

compare frequencies of the target reflector signal and the one or more reference reflector signals;
determine, for each of the one or more reference reflector signals, a frequency distance between the target reflector signal and the reference reflector signal; and
generate a distance measuring signal pattern based on the frequency distance of each of the one or more reference reflector signals.

14. The system of claim 13 wherein the processor is further configured to:

receive a location determination request;
emit electromagnetic waves comprising a transmission signal in response to the location determination request;
monitor for signals from reflection of the electromagnetic waves by a main reflector and one or more reference reflectors;
record signals detectable by the radar sensor;
calculate, iteratively for each recorded signal, frequency differences $F_{(n-1)n} = f_{n-1} - f_n$ over frequency domains $f_1, f_2, ... f_n$;
search for a match of the distance measuring signal pattern to the calculated frequency differences;
determine a match to the distance measuring signal pattern;
identify the target reflector signal based on the match; and
determine a distance based on the target reflector signal.

15. A method for calibrating signal frequency signature by a radar sensor in an elevator system, the method comprising:

emitting, by the radar sensor, electromagnetic waves comprising a transmission signal to perform a calibration procedure with a reflector configured in a first position;
receiving, by the radar sensor, a first signal comprising a reflection of the electromagnetic waves by the reflector;
recording, by the radar sensor, the first signal corresponding to the first position of the reflector;
actuating, by the radar sensor, an electromechanical device coupled to the reflector causing the reflector to move to a second position;
receiving, by the radar sensor, a second signal comprising a reflection of the electromagnetic waves by the reflector configured in the second position;
recording, by the radar sensor, the second signal corresponding to the second position of the reflector;

comparing, by the radar sensor, the first signal with the second signal; and

determining, by the radar sensor, a reference frequency difference usable by the radar sensor to identify signals corresponding to the reflector from amongst a plurality of signals.

FIG. 1

TRANSMISION SIGNAL

202

204

$\Delta f$

FREQUENCY

TIME

FIG. 2

RECEIVED SIGNAL IN FREQUENCY DOMAINS

AMPLITUDE

$\Delta f$

FREQUENCY(DISTANCE)

FIG. 3

FIG. 4

FIG. 5

FIG. 6

FIG. 7

800

CALIBRATE TARGET
REFLECTOR SIGNAL
802

CALIBRATE REFERENCE
REFLECTOR SIGNAL
804

CALIBRATE
ADDITIONAL
REFERENCE
REFLECTOR
SIGNALS?
806

YES

NO

COMPARE FREQUENCY BETWEEN THE
TARGET REFLECTOR SIGNAL AND ONE OR
MORE REFERENCE REFLECTOR SIGNALS
808

DETERMINE FREQUENCY DISTANCES
BETWEEN THE TARGET REFLECTOR SIGNAL
AND THE ONE OR MORE REFERENCE
REFLECTOR SIGNALS BASED ON THE
COMPARISON
810

GENERATE DISTANCE MEASURING
SIGNAL PATTERN BASED ON THE
FREQUENCY DISTANCES
812

FIG. 8

FIG. 9

FIG. 10

EP 4 325 248 A1

1100

```
┌─────────────────────┐          ┌──────────────────────────┐
│   RECEIVE LOCATION   │          │   SEARCH THE FREQUENCY   │
│ DETERMINATION REQUEST│    ┌────▶│  DISTANCE(S) FOR DISTANCE│
│        1102          │    │     │ MEASURING SIGNAL PATTERN │
│                      │    │     │           1110           │
└──────────┬───────────┘    │     └────────────┬─────────────┘
           │                │                  │
           ▼                │                  ▼
┌─────────────────────┐     │     ┌──────────────────────────┐
│ EMIT ELECTROMAGNETIC│     │     │   DETERMINE MATCH TO THE │
│        WAVES        │     │     │  DISTANCE MEASURING SIGNAL│
│        1104         │     │     │          PATTERN         │
│                     │     │     │           1112           │
└──────────┬──────────┘     │     └────────────┬─────────────┘
           │                │                  │
           ▼                │                  ▼
┌─────────────────────┐     │     ┌──────────────────────────┐
│   RECEIVE SIGNALS   │     │     │IDENTIFY A TARGET REFLECTOR SIGNAL│
│        1106         │     │     │     BASED ON THE MATCH    │
│                     │     │     │           1114           │
└──────────┬──────────┘     │     └────────────┬─────────────┘
           │                │                  │
           ▼                │                  ▼
┌─────────────────────┐     │     ┌──────────────────────────┐
│ CALCULATE FREQUENCY │     │     │ DETERMINE DISTANCE BASED ON│
│    DIFFERENCE(S)    ├─────┘     │  THE TARGET REFLECTOR SIGNAL│
│        1108         │           │           1116           │
└─────────────────────┘           └──────────────────────────┘
```

FIG. 11

FIG. 12

- $f_{12} = f_1 - f_2$
- $f_{13} = f_1 - f_3$
- ...
- $f_{1n} = f_1 - f_n$
- $f_{23} = f_2 - f_3$
- ...
- $f_{2n} = f_2 - f_n$
- ...
- $F_{(n-1)n} = f_{n-1} - f_n$

$$\Rightarrow \begin{bmatrix} f_{12} & f_{13} & f_{14} & \cdots & f_{1n} \\ & f_{23} & f_{24} & \cdots & f_{2n} \\ & & f_{34} & \cdots & f_{3n} \\ & & & \cdots & \cdots \\ & & & & f_{(n-1)n} \end{bmatrix}$$

FIG. 13

$$\begin{bmatrix} f_{\text{preset1}} & f_{\text{preset2}} \end{bmatrix} \quad \begin{bmatrix} f_{12} & f_{13} & f_{14} & \cdots & f_{1n} \\ & f_{23} & f_{24} & \cdots & f_{2n} \\ & & f_{34} & \cdots & f_{3n} \\ & & & \cdots & \cdots \\ & & & & f_{(n-1)n} \end{bmatrix}$$

$$\begin{bmatrix} f_{\text{preset1}} & f_{\text{preset2}} \end{bmatrix} \quad \begin{bmatrix} f_{12} & f_{13} & f_{14} & \cdots & f_{1n} \\ & f_{23} & f_{24} & \cdots & f_{2n} \\ & & f_{34} & \cdots & f_{3n} \\ & & & \cdots & \cdots \\ & & & & f_{(n-1)n} \end{bmatrix}$$

$\cdots$

$$\begin{bmatrix} f_{\text{preset1}} & f_{\text{preset2}} \end{bmatrix} \quad \begin{bmatrix} f_{12} & f_{13} & f_{14} & \cdots & f_{1n} \\ & f_{23} & f_{24} & \cdots & f_{2n} \\ & & f_{34} & \cdots & f_{3n} \\ & & & \cdots & \cdots \\ & & & & f_{(n-1)n} \end{bmatrix}$$

FIG. 14

EP 4 325 248 A1

FIG. 15

FIG. 16

EMIT ELECTROMAGNETIC WAVES
COMPRISING A TRANSMISSION
SIGNAL
1702

↓

RECEIVE A FIRST SIGNAL
1704

↓

RECORD THE FIRST SIGNAL
CORRESPONDING TO A FIRST
POSITION OF A REFLECTOR
1706

↓

ACTUATE ELECTROMECHANICAL
DEVICE
1708

→

RECEIVE A SECOND SIGNAL
1710

↓

RECORD THE SECOND SIGNAL
CORRESPONDING TO A SECOND
POSITION OF THE REFLECTOR
1712

↓

COMPARE THE FIRST SIGNAL WITH
THE SECOND SIGNAL
1714

↓

DETERMINE REFERENCE
FREQUENCY DIFFERENCE
1716

FIG. 17

FIG. 18

FIG. 19

2000

2003

COMMUNICATION
MODULE

2001

PROCESSING
CIRCUITRY

2005

INPUT/OUTPUT
MODULE

2007

MEMORY

FIG. 20

Europäisches
Patentamt

European
Patent Office

Office européen
des brevets

**EUROPEAN SEARCH REPORT**

Application Number

EP 23 18 5263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 740 818 A (HITACHI BUILDING TECH GUANGZHOU CO LTD) 3 December 2021 (2021-12-03) * page 1, paragraph 2 - page 21, paragraph 10; figures 1,3b, 3c * | 1-15 | INV. G01S13/88 G01S7/40 B66B1/34 B66B3/02 G01S13/06 |
| A | US 9 653 802 B2 (GRIESHABER VEGA KG [DE]) 16 May 2017 (2017-05-16) * column 2, line 41 - column 5, line 51 * | 15 | ADD. B66B5/00 |

TECHNICAL FIELDS
SEARCHED (IPC)

G01S
B66B

The present search report has been drawn up for all claims

| Place of search | Date of completion of the search | Examiner |
|---|---|---|
| Munich | 9 November 2023 | Heiß, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 5263

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| CN 113740818 | A | 03-12-2021 | NONE | | |
| US 9653802 | B2 | 16-05-2017 | CN 104330130 | A | 04-02-2015 |
| | | | DE 102013214324 | A1 | 22-01-2015 |
| | | | EP 2829852 | A2 | 28-01-2015 |
| | | | US 2015029054 | A1 | 29-01-2015 |
| | | | US 2017219409 | A1 | 03-08-2017 |

For more details about this annex : see Official Journal of the European Patent Office, No. 12/82